# EUROPÄISCHE PATENTSCHRIFT

(11) **EP 1 077 026 B1**
(45) Veröffentlichungstag und Bekanntmachung des Hinweises auf die Patenterteilung: **05.02.2003**
(21) Anmeldenummer: 00114804.8
(22) Anmeldetag: 11.07.2000
(51) Int. Cl.: A01K 31/00, A01K 31/12

(54) **Gitterrost zum Ausbilden eines Bodens für die Haltung von Geflügel**
Floor grid for keeping poultry
Caillebotis pour l'élevage de volaille

(30) Priorität: 19.08.1999 DE 29914573 U
(43) Veröffentlichungstag der Anmeldung: 21.02.2001
(73) Patentinhaber: Big Dutchman International GmbH, 49377 Vechta (DE)
(72) Erfinder: Friedrich Otto-Lübker, 49635 Radbergen-Vehs (DE)
(74) Vertreter: Jabbusch, Matthias

(56) Entgegenhaltungen:
- EP-A- 0 051 844
- DE-A- 1 964 021

## Beschreibung

Die Erfindung betrifft aus Gitterprofilen ausgebildete Gitterroste zum Ausbilden eines Bodens für die Haltung von Geflügel.

Geflügel wird beispielsweise in Stallanlagen auf dem Boden, in Volieren oder in Käfigen gehalten. Damit sich das Geflügel z. B. nicht unmittelbar auf dem Boden und somit beispielsweise unmittelbar in eigenen Exkrementen aufhält, sind Gitterroste zum Ausbilden eines Bodens vorgesehen. Auf diesem Boden kann sich das Geflügel aufhalten. Der aus den Gitterrosten ausgebildete Boden ist bei einer Bodenhaltung von Geflügel in einem Abstand zum eigentlichen Boden der Geflügelstallung angeordnet. Der Abstand beträgt beispielsweise 80 cm. Unterhalb des aus den Gitterrosten gebildeten Bodens ist beispielsweise eine Exkrementengrube angeordnet. In dieser werden die Exkremente gesammelt. Sie sind aus dieser beispielsweise in regelmäßigen zeitlichen Abständen entfernbar. Durch die Gitteröffnungen des Rostes können dabei Exkremente durch das Gitter hindurchfallen. Mit mehreren Gitterrosten ist dabei beispielsweise ein geschlossener Boden ausbildbar, indem die Gitterroste in einer Ebene nebeneinander angeordnet werden und mit ihren Rändern aneinander stoßen. In gleicher Weise können mit Gitterrosten Böden für die Haltung von Geflügel in Volieren und/oder Käfigen ausgebildet werden. Hier werden die Gitterroste in geeigneter Weise mit den Käfigen und den Volieren in Verbindung gebracht, beispielsweise in der Art, daß ein Gitterrost den Käfigboden ausbildet. Unterhalb der Gitterroste können dann geeignete Einrichtungen zum Auffangen der Exkremente, wie beispielsweise Kotbänder, vorgesehen sein. Derartige Auffangeinrichtungen sind insbesondere dann vorteilhaft, wenn Volieren mehretagig übereinander angeordnet werden.

Ein Gitterrost der eingangs genannten Gattung ist in der EP 0 051 844 offenbart. Dieser Gitterrost ist aus nebeneinander liegenden Förderbändern ausgebildet.

Für Geflügel werden neben Gitterrosten häufig Sitzstangen vorgesehen, auf welche sich das Geflügel, beispielsweise während einer Ruhe, setzen kann. Für die zusätzlich vorgesehene Sitzstange bzw. für mehrere vorgesehene Sitzstangen ist ein Installationsaufwand erforderlich.

Der Erfindung liegt die Aufgabe zugrunde, Gitterroste der eingangs genannten Gattung aufzuzeigen, die eine Verringerung des Installationsaufwandes für Sitzstangen ermöglichen.

Diese Aufgabe ist in einer ersten Ausbildung erfindungsgemäß dadurch gelöst, daß der Gitterrost zumindestens einen als Sitzstange für das Geflügel ausgebildeten Gitterabschnitt aufweist, wobei der als Sitzstange ausgebildete Gitterabschnitt ein gegenüber anderen Gitterprofilen verbreitertes Gitterprofil ist.

Bei dem erfindungsgemäßen Gitterrost ist eine Sitzstange in diesen integriert. Auf vorteilhafte Weise ist somit die zusätzliche Anordnung und Installation einer Sitzstange zu einen Boden ausbildenden Gitterrosten nicht erforderlich. Dadurch reduzieren sich Installationsaufwand und -kosten. Die Sitzstange wird zugleich mit Anordnen des erfindungsgemäßen Gitterrostes zum Beispiel in der Geflügelstallanlage installiert. Eine Reduzierung der Installationskosten ist auch dadurch erreicht, daß die Zahl der zu installierenden Bauteile verkleinert ist. Separate Sitzstangen sind nicht erforderlich, auf vorteilhafte Weise werden sie von den Gitterrosten bereitgestellt.

Dabei ist der Gitterrost aus Gitterprofilen gebildet und ist der als Sitzstange ausgebildete Gitterabschnitt ein gegenüber anderen Gitterprofilen verbreitertes Gitterprofil. Die mehreren Gitterprofile des Gitterrostes können beispielsweise einander kreuzen, so daß insgesamt eine ebene Oberfläche mit Durchbrechungen zwischen den sich kreuzenden Gitterprofilen ausgebildet ist. Wenigstens ein Gitterprofil des Geflügelrostes ist verbreitert, und dieses Gitterprofil ist der als Sitzstange ausgebildete Gitterabschnitt des Geflügelrostes. Durch die Verbreiterung des Gitterprofils wird die Sitzstange ausgebildet, die von dem Geflügel angenommen wird.

Das verbreiterte Gitterprofil weist vorzugsweise Durchbrüche auf, so daß Exkremente durch das Gitterprofil hindurchfallen können.

Der als Sitzstange ausgebildete Gitterabschnitt kann dabei beispielsweise im Zentrum der flächigen Erstreckung des Geflügelrostes angeordnet sein. Möglich ist auch, den als Sitzstange ausgebildeten Gitterabschnitt im Randbereich der flächigen Erstreckung eines Gitterrostes anzuordnen. Bei einer Anordnung von mehreren Gitterrosten in einer Ebene innerhalb einer Geflügelstallanlage können dabei die Geflügelroste mit Rändern derart aneinander stoßen, daß zwei als Sitzstangen ausgebildete Gitterabschnitte gleichfalls direkt aneinander stoßen. Durch beide als Sitzstangen ausgebildete Gitterabschnitte wird dadurch eine verbreiterte Sitzstange für das Geflügel gebildet. Bei der Ausbildung des erfindungsgemäßen Gitterrostes, insbesondere bei der Anordnung des als Sitzstange ausgebildeten Gitterabschnittes kann in vorteilhafter Weise darauf Rücksicht genommen werden, in welchem räumlichen Bereich der Stallanlage die Exkremente des Geflügels gesammelt bzw. aufgenommen werden sollen. Der erfindungsgemäße Gitterrost kann derart ausgebildet werden, daß eine in ihn integrierte Sitzstange oberhalb einer Exkrementengrube angeordnet ist. Andere Abschnitte des Gitterrostes, die nicht als Sitzstangen ausgebildet sind, können dagegen oberhalb von Scharrflächen angeordnet sein. Somit wird vorteilhaft verhindert, daß Exkremente vom möglicherweise über längere Zeit auf der Sitzstange befindlichem Geflügel die Scharrflächen verschmutzen.

Nach einer zweiten Ausbildung ist die Aufgabe erfindungsgemäß dadurch gelöst, daß der als Sitzstange ausgebildete Gitterabschnitt aus mehreren eng aneinander angenäherten Gitterprofilen ausgebildet ist.

Somit bildet nicht ein Gitterprofil aufgrund seiner Verbreiterung die Sitzstange aus, sondern es sind mehrere schmale Gitterprofile derart aneinander angenähert, daß sie insgesamt eine verbreiterte Fläche ausbilden. Zwischen den einzelnen, vorzugsweise parallel zueinander ausgerichteten Gitterprofilen ist dabei jeweils ein Abstand vorhanden, so daß Exkremente des Geflügels durch die Gitterprofile hindurchfallen können. Eine Anhäufung von Exkrementen auf der Oberfläche der somit ausgebildeten Sitzstange ist vorteilhaft verhindert.

Das als Sitzstange ausgebildete Gitterprofil kann nach einer Weiterbildung der Erfindung eine elastische Auflage aufweisen, die auf dieses Gitterprofil aufgebracht ist. Die elastische Auflage verbessert den Sitzkomfort für das Geflügel auf der Sitzstange. Die Auflage ist beispielsweise aus einem Kautschuk- oder aus einem Gummiwerkstoff gefertigt, der einerseits die gewünschte Elastizität aufweist und der andererseits einfach reinigbar ist.

Die Breite einer Sitzstange beträgt vorzugsweise 50 mm. Einander benachbarte Sitzstangen, beispielsweise innerhalb ein und desselben Gitterrostes sind derart angeordnet, daß zwischen ihnen ein Mindestabstand von ca. 30 cm ausgebildet ist.

Ein Ausführungsbeispiel der Erfindung, aus dem sich weitere erfinderische Merkmale ergeben, ist in der Zeichnung dargestellt. Es zeigen:
- Fig. 1:: eine Draufsicht eines Gitterrostes,
- Fig. 2:: eine Schnittansicht des Gitterrostes gemäß Fig. 1 entlang der Schnittlinie II-II und
- Fig. 3:: eine perspektivische Ansicht des Gitterrostes gemäß Fig. 1 und 2.

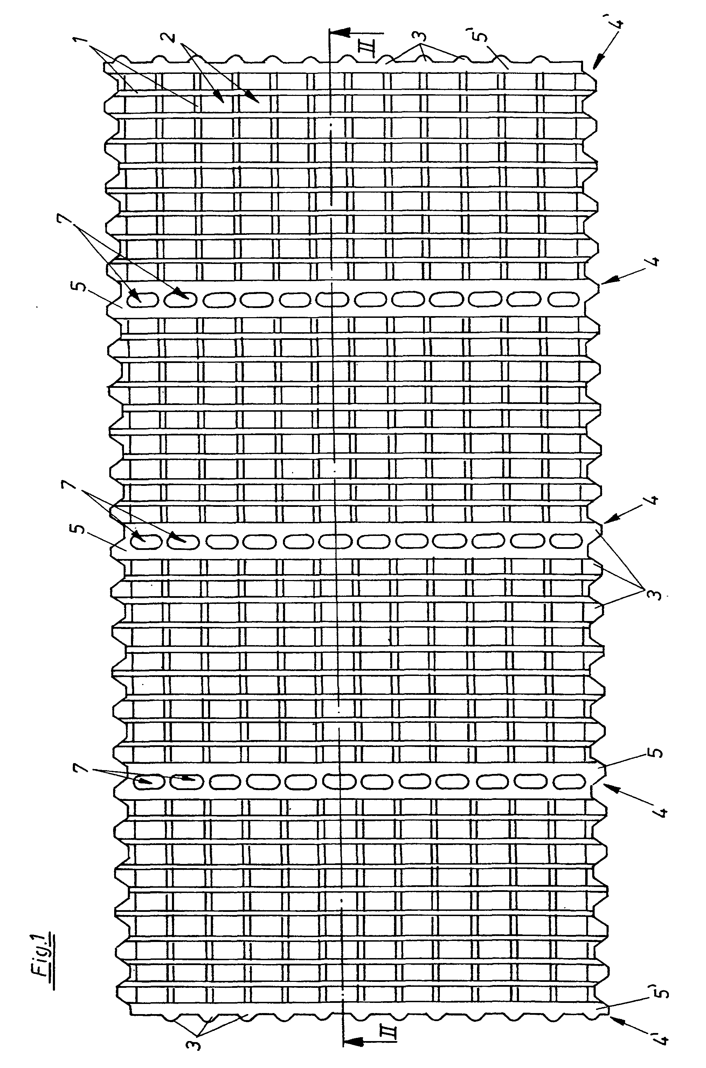

Der Gitterrost in Fig. 1 ist aus Gitterprofilen 1 zusammengesetzt, die einander gitterartig kreuzen. Zwischen den Gitterprofilen 1 sind Durchbrüche 2 ausgebildet. Der Gitterrost weist eine rechteckige Bauform auf. Mit diesem Gitterrost, vorzugsweise mit mehreren Gitterrosten, ist innerhalb einer Stallanlage ein Boden für die Haltung von Geflügel ausbildbar.

Die Seitenkanten des Gitterrostes sind mit Vorsprüngen 3 versehen. Diese Vorsprünge 3 sind bei der Aneinanderlage zweier benachbarter Gitterroste auf gleicher Höhe einander angenähert, so daß sie bei Verwenden mehrerer Gitterroste zu einer Gitterrostoberfläche beitragen.

Der Gitterrost in Fig. 1 weist innerhalb seiner flächigen Erstreckung drei Sitzstangen 4 für Geflügel auf. Zwei weitere Sitzstangen 4' sind im Bereich der stirnseitigen Randbereiche des Gitterrostes angeordnet. Die Sitzstangen 4, 4' sind jeweils durch ein Gitterprofil 5, 5' ausgebildet, das gegenüber den übrigen Gitterprofilen 1 verbreitert ist. Mit den Sitzstangen 4' ist beim Aneinanderlegen zweier Gitterroste eine Sitzstange ausbildbar, die der Sitzstange 4 im Verlauf der flächigen Erstreckung des Gitterrostes entspricht.

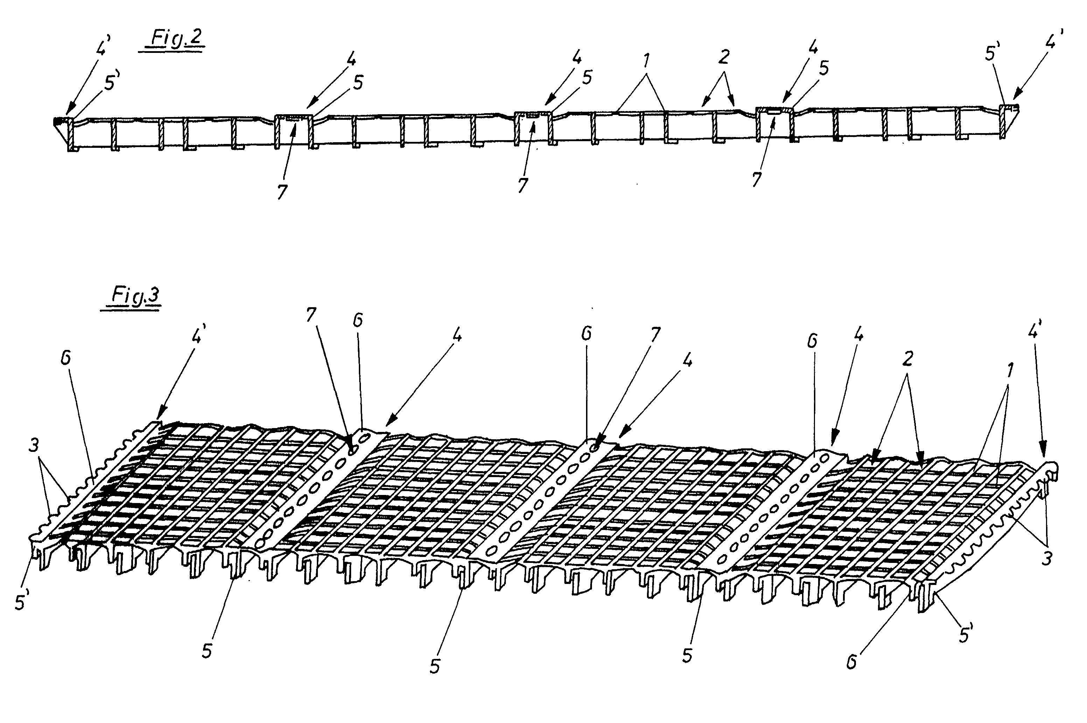

Fig. 2 zeigt den Querschnitt der Sitzstangen 4, 4'. Die die Sitzstangen 4 ausbildenden Profile 5 sind im Querschnitt u-förmig ausgebildet, wobei die U-Basen jeweils die in Fig. 1 sichtbare obere Sitzfläche ausbilden. Die Sitzstangen 4' sind durch L-förmige Profile 5' gebildet. Auch die weiteren Profile 1 erstrecken sich, wie aus Fig. 2 ersichtlich, nach unten, so daß eine Gitterrosthöhe ausgebildet ist.

Die Gitterprofile 5, 5' können dabei vorzugsweise derart mit dem Boden einer Geflügelstallung in räumliche Zuordnung gebracht werden, daß sie oberhalb von Exkrementenauffangbereichen angeordnet sind. Dabei sind vorzugsweise mehrere Gitterroste mittels einer geeigneten Tragkonstruktion in einer Ebene oberhalb des Bodens der Stallanlage angeordnet.

In Fig. 3 ist angedeutet, daß die Gitterprofile 5, 5' auf ihrer in die Gitteroberfläche eingefügten Oberseite jeweils mit einer Auflage 6 belegt sind. Diese besteht aus einem elastischen Material. In die Sitzstangen 4 und in die auf diesen Sitzstangen 4 aufliegenden Auflagen 6 sind jeweils Durchbrüche 7 eingebracht.

## Patentansprüche

1. Aus Gitterprofilen (1) ausgebildeter Gitterrost zum Ausbilden eines Bodens für die Haltung von Geflügel,
der zumindestens einen als Sitzstange (4, 4') für das Geflügel ausgebildeten Gitterabschnitt aufweist, **dadurch gekennzeichnet, daß** der als Sitzstange (4, 4') ausgebildete Gitterabschnitt ein gegenüber anderen Gitterprofilen (1) verbreitertes Gitterprofil (5, 5') ist.

2. Gitterrost nach Anspruch 1, **dadurch gekennzeichnet, daß** im Zentrum seiner flächigen Erstreckung der als Sitzstange (4, 4') ausgebildete Gitterabschnitt angeordnet ist.

3. Gitterrost nach Anspruch 1, **dadurch gekennzeichnet, daß** im Randbereich seiner flächigen Erstreckung der als Sitzstange (4, 4') ausgebildete Gitterabschnitt angeordnet ist.

4. Gitterrost nach einem der Ansprüche 1 bis 3, **dadurch gekennzeichnet, daß** das verbreiterte Gitterprofil (5) Durchbrüche aufweist.

5. Aus Gitterprofilen (1) ausgebildeter Gitterrost zum Ausbilden eines Bodens für die Haltung von Geflügel, der zumindestens einen als Sitzstange (4, 4') für das Geflügel ausgebildeten Gitterabschnitt aufweist,
**dadurch gekennzeichnet,**
**daß** der als Sitzstange ausgebildete Gitterabschnitt aus mehreren eng aneinander angenäherten Gitterprofilen ausgebildet ist.

6. Gitterrost nach einem der vorhergehenden Ansprüche, **dadurch gekennzeichnet, daß** auf das als Sitzstange (4, 4') ausgebildete Gitterprofil (5, 5') eine elastische Auflage (6) aufgebracht ist.

7. Gitterrost nach Anspruch 6, **dadurch gekennzeichnet, daß** die elastische Auflage (6) aus einem Kautschukoder aus einem Gummiwerkstoff gefertigt ist.

8. Gitterrost nach einem der vorhergehenden Ansprüche, **dadurch gekennzeichnet, daß** die Breite der Sitzstange (4, 4') etwa 50 mm beträgt.

9. Gitterrost nach einem der vorhergehenden Ansprüche, **dadurch gekennzeichnet, daß** der Abstand zwischen zwei einander benachbarten Sitzstangen (4, 4') zumindestens circa 30 cm ist.

## Claims

1. Grid-type grating formed from grid profiles (1), for forming a floor for keeping poultry, the said grid-type grating having at least one grid section designed as a seat rod (4, 4') for the poultry, **characterized in that** the grid section designed as a seat rod (4, 4') is a grid profile (5, 5') which is enlarged with respect to other grid profiles (1).

2. Grid-type grating according to Claim 1, **characterized in that** the grid section designed as a seat rod (4, 4') is arranged in the centre of the sheet-like extent of the said grating.

3. Grid-type grating according to Claim 1, **characterized in that** the grid section designed as a seat rod (4, 4') is arranged in the edge region of the sheet-like extent of the said grating.

4. Grid-type grating according to one of Claims 1 to 3, **characterized in that** the enlarged grid profile (5) has apertures.

5. Grid-type grating formed from grid profiles (1), for forming a floor for keeping poultry, the said grating having at least one grid section which is designed as a seat rod (4, 4') for the poultry, **characterized in that** the grid section designed as a seat rod is formed from a plurality of grid profiles arranged close to one another.

6. Grid-type grating according to one of the preceding claims, **characterized in that** an elastic support (6) is fitted onto the grid profile (5, 5') designed as a seat rod (4, 4').

7. Grid-type grating according to Claim 6, **characterized in that** the elastic support (6) is manufactured from an unvulcanized or vulcanized rubber material.

8. Grid-type grating according to one of the preceding claims, **characterized in that** the width of the seat rod (4, 4') is approximately 50 mm.

9. Grid-type grating according to one of the preceding claims, **characterized in that** the distance between two adjacent seat rods (4, 4') is at least approximately 30 cm.

## Revendications

1. Caillebotis réalisé à partir de profilés pour grille (1), destiné à former un plancher pour l'élevage de volailles, qui comporte au moins un tronçon de grille réalisé en tant que perchoir (4, 4') pour la volaille, **caractérisé en ce que** le tronçon de grille réalisé en tant que perchoir (4, 4') est un profilé pour grille (5, 5') élargi par rapport aux autres profilés pour grille (1).

2. Caillebotis selon la revendication 1, **caractérisé en ce qu'**au centre de sa surface est disposé le tronçon de grille réalisé en tant que perchoir (4, 4').

3. Caillebotis selon la revendication 1, **caractérisé en ce que** dans la zone de bordure de son étendue à plat est disposé le tronçon de grille réalisé en tant que perchoir (4, 4').

4. Caillebotis selon l'une des revendications 1 à 3, **caractérisé en ce que** le profilé élargi (5) pour grille présente des ajours.

5. Caillebotis réalisé à partir de profilés pour grille (1) destiné à former un plancher pour l'élevage de volailles, qui comporte au moins un tronçon de grille réalisé en tant que perchoir (4, 4') pour la volaille, **caractérisé en ce que** le tronçon de grille réalisé en tant que perchoir est constitué de plusieurs profilés pour grille étroitement rapprochés les uns des autres.

6. Caillebotis selon l'une des revendications précédentes, **caractérisé en ce qu'**un revêtement élastique (6) est placé sur le profilé pour grille (5, 5') réalisé en tant que perchoir (4, 4').

7. Caillebotis selon la revendication 6, **caractérisé en ce que** le revêtement élastique (6) est fabriqué dans un matériau de caoutchouc ou de gomme.

8. Caillebotis selon l'une des revendications précédentes, **caractérisé en ce que** la largeur du perchoir (4, 4') est d'environ 50 mm.

9. Caillebotis selon l'une des revendications précédentes, **caractérisé en ce que** la distance entre deux perchoirs (4, 4') voisins est au moins d'environ 30 cm.
